# FASCICULE DE BREVET EUROPEEN

(11) **EP 2 456 728 B1**
(45) Date de publication et mention de la délivrance du brevet: **01.04.2020**
(21) Numéro de dépôt: 10752069.4
(22) Date de dépôt: 21.07.2010
(51) Int. Cl.: C03C 3/087, G02F 1/153, C03C 3/091

(54) **DISPOSITIF ELECTROCHROME**
ELEKTROCHROME VORRICHTUNG
ELECTROCHROMIC DEVICE

(30) Priorité: 22.07.2009 FR 0955119
(43) Date de publication de la demande: 30.05.2012
(73) Titulaire: Sage Electrochromics, Inc., Faribault, MN 55021 (US)
(72) Inventeur: GIRON, Jean-Christophe, MN 55436 EDINA (US); GY, René, F-93140 Bondy (FR); BERTIN-MOUROT, Thomas, F-75007Paris (FR)
(74) Mandataire: Saint-Gobain Recherche
(86) Numéro de dépôt international: PCT/FR2010/051543
(87) Numéro de publication internationale: WO 2011/010067

(56) Documents cités:
- EP-A1- 0 831 360
- WO-A2-2010/042460
- JP-A- 11 310 432
- JP-A- 2007 284 307
- US-A1- 2009 131 238
- DATABASE WPI Week 200938 Thomson Scientific, London, GB; AN 2009-J89678 XP002571145, -& JP 2009 120407 A (CENTRAL GLASS CO LTD) 4 juin 2009 (2009-06-04)

## Description

La présente invention se rapporte à un dispositif électrochrome à transparence contrôlée, notamment destiné à constituer un vitrage électrocommandable ainsi qu'un procédé de fabrication de celui-ci. Elle concerne également un vitrage électrochrome pourvu d'un tel dispositif ainsi que l'utilisation de ce dernier pour des applications les plus diverses.

On connaît des vitrages dont la capacité de transmission de la lumière est réglable à partir d'un bon niveau de transparence jusqu'à une opacité la plus totale. De tels vitrages ont montré des applications dans les domaines techniques les plus divers.

WO 2010/042 460, art antérieur selon l'Art 54(3) CBE, divulgue des substrats en verre de type alumino-silicate pour vitrages électrochromiques ayant un coefficient de dilatation thermique compris entre 40 et 50 * 10-7 /°C.

Le document EP 831 360 décrit un vitrage électrochrome comprenant deux substrats en verre , deux couches électroconductrices, deux couches électrochromes et un électrolyte ; les substrats sont en verre silico-sodo-calcique.

On peut ainsi les utiliser en tant que vitrages d'une habitation afin, par exemple, d'ajuster le niveau d'ensoleillement d'un local en fonction des conditions extérieures et des souhaits des utilisateurs. On peut également les utiliser en tant que volets d'isolation pour préserver l'intimité des habitants d'un local soit vis-à-vis de l'extérieur, soit vis-à-vis de pièces contiguës.

On peut également, dans le domaine automobile, faire appel à de tels dispositifs pour, par exemple, régler le niveau de transparence du pare-brise et/ou des vitres latérales ou du vitrage de toit d'une voiture, ainsi que sur certains accessoires de celle-ci, tels que notamment les rétroviseurs, afin de contrôler le flux de la lumière réfléchie vers le conducteur et éviter l'éblouissement de ce dernier. On peut bien entendu les utiliser dans d'autres domaines tels que notamment le domaine aéronautique pour contrôler par exemple la transparence des hublots des aéronefs.

Les dispositifs électrochromes étant absorbants à l'état opaque, ils sont susceptibles de s'échauffer fortement en cas d'exposition à la lumière, notamment solaire. C'est particulièrement le cas pour des dispositifs électrochromes utilisés comme vitrages. Lorsque ces vitrages sont montés dans un cadre, par exemple pour une application en façade de bâtiment, il en résulte souvent l'apparition de gradients thermiques entre le centre du vitrage et ses bords, qui peuvent occasionner la casse du vitrage. Une ombre portée en plein soleil peut également conduire au même phénomène. Pour cette raison, les substrats en verre silico-sodo-calcique employés dans les dispositifs électrochromes sont actuellement trempés ou durcis de manière à présenter une meilleure résistance thermomécanique. L'utilisation de verres trempés ou durcis n'est toutefois pas dénuée d'inconvénients : ces verres ne peuvent pas être découpés, si bien que le dépôt des couches minces doit être réalisé sur des substrats en verre ayant déjà leur taille finale. En fonction des projets architecturaux, les tailles finales sont très diverses. Lorsque les couches minces sont déposées par pulvérisation cathodique magnétron, les substrats de différentes tailles sont disposés sur des porte-substrats métalliques. Les paramètres de dépôt des couches doivent alors être adaptés au cas par cas en tenant compte du rapport de surface entre le vitrage et le porte-substrat. Le procédé devient par conséquent difficile à contrôler. Pour des raisons économiques, de logistique et de facilité de production, il serait donc préférable de pouvoir déposer les couches minces sur des substrats de taille standard, en général de grande taille, puis de découper les substrats à la taille voulue.

Les inventeurs ont pu mettre en évidence que ce but était atteint grâce à l'utilisation de substrats en verre dont le coefficient de dilatation thermique linéaire est bien déterminé.

Ainsi, l'invention a pour objet un dispositif électrochrome selon la revendication 1 comprenant un premier substrat en verre non trempé dont le coefficient de dilatation thermique linéaire est compris entre 35 et 60*10⁻⁷ /°C. *A contrario*, les verres du type silico-sodo-calcique actuellement employés ont un coefficient de dilatation thermique linéaire de l'ordre de 89.10⁻⁷/°C.

On entend par coefficient de dilatation linéaire, le coefficient moyen de dilatation linéaire. Ce coefficient peut être mesuré entre une température proche de l'ambiante (typiquement 20°C, 30°C ou encore 50°C) et une température inférieure à la température de transition vitreuse du verre, par exemple 300°C, ou 400°C, voire 500°C. Typiquement, la plage de température considérée est la plage 20°C-300°C. L'allongement du verre variant linéairement en fonction de la température dans la gamme de température inférieure à la température de transition vitreuse, le choix des températures n'influe pas sensiblement sur le résultat.

Le dispositif selon l'invention comprend de préférence un deuxième substrat en verre, souvent appelé substrat de face avant. Le deuxième substrat peut également posséder un coefficient de dilatation thermique linéaire tel que défini, ou au contraire un coefficient de dilatation thermique linéaire standard, par exemple de l'ordre de 85 à 90.10⁻⁷/°C.

De préférence, le premier substrat en verre possède un coefficient de dilatation thermique linéaire inférieur ou égal à 50.10⁻⁷/°C, voire inférieur ou égal à 45.10⁻⁷/°C.

Le premier substrat en verre est un verre d'oxyde à base de silice, au sens où la teneur en SiO₂ est supérieure ou égale à 50%. Dans l'ensemble du texte, les teneurs sont des teneurs pondérales.

Le premier substrat en verre possède de préférence une composition chimique comprenant les oxydes suivants : SiO₂, Al₂O₃, et au moins un oxyde d'un métal alcalino-terreux.

En plus des oxydes précédemment cités, la composition du substrat peut également contenir de l'oxyde de bore (B₂O₃) et/ou au moins un oxyde d'un métal alcalin.

La composition du substrat peut encore contenir un ou plusieurs des oxydes suivants : ZrO₂, P₂O₅, ZnO, SnO₂, SO₃, As₂O₃, Sb₂O₃.

Le substrat peut également contenir un ou plusieurs colorant(s), parmi lesquels figurent :
- les oxydes de fer, de vanadium, de titane, de chrome, de manganèse, de cobalt, de nickel, de cuivre, de cérium, de néodyme, de praséodyme, d'erbium,
- les métaux sous forme colloïdale, comme le cuivre, l'argent ou l'or, ou sous forme élémentaire ou ionique, comme le sélénium ou le soufre.

La teneur en silice (SiO₂) est comprise entre 50 et 82%, de préférence comprise entre 50 et 75%, notamment entre 50 et 65%. De fortes teneurs s'accompagnent en effet d'une augmentation de la viscosité.

La teneur en alumine (Al₂O₃) est comprise entre 1 et 15%, notamment entre 5 et 15%. De fortes teneurs en alumine peuvent conduire à une augmentation de la viscosité du verre ainsi que de sa tendance à dévitrifier.

L'oxyde de bore (B₂O₃) peut être utile pour diminuer à la fois la viscosité du verre et son coefficient de dilatation thermique. Sa teneur est inférieure ou égale à 20%, notamment 15%.

Les métaux alcalino-terreux comprennent le magnésium, le calcium, le strontium, le baryum. Le calcium et le magnésium sont préférés pour leur faible coût et leur faible impact sur la densité du verre. Les oxydes d'un métal alcalino-terreux sont utiles pour diminuer la viscosité du verre et faciliter la fusion, sans trop pénaliser le coefficient de dilatation. En grande quantité, ils peuvent toutefois conduire à favoriser la dévitrification du verre. Leur teneur totale est inférieure ou égale à 15%.

Les métaux alcalins comprennent le lithium, le sodium, le potassium, ces deux derniers étant préférés pour leur faible coût. Les oxydes d'un métal alcalin ont pour effet de faciliter la fusion du verre en diminuant sa viscosité et sa propension à dévitrifier. Ces oxydes conduisent toutefois à une augmentation importante du coefficient de dilatation thermique, si bien que leur teneur totale est de préférence inférieure ou égale à 8%, notamment 6% et même 5%. La teneur en oxydes de sodium et potassium est inférieure ou égale à 8%.

Le premier substrat présente une composition chimique comprenant les constituants suivants, dans les limites pondérales ci-après définies :

| | |
|---|---|
| SiO₂ | 50 à 82%, notamment de 50 à 75% |
| B₂O₃ | 0 à 20% |
| Al₂O₃ | 1 à 15% |
| MgO | 0 à 10% |
| CaO | 0 à 15% |
| SrO | 0 à 5% |
| BaO | 0 à 15% |
| CaO+MgO+BaO+SrO | 0 à 15%, notamment de 5 à 15% |
| Na₂O | 0 à 6% |
| K₂O | 0 à 8 % |
| Na₂O+K₂O | 0 à 8%. |

De manière encore plus préférée, le premier substrat présente une composition chimique comprenant les constituants suivants, dans les limites pondérales ci-après définies :

| | |
|---|---|
| SiO₂ | 50 à 60% |
| B₂O₃ | 10 à 15% |
| Al₂O₃ | 10 à 15% |
| MgO | 2 à 5 % |
| CaO | 2 à 5 % |
| SrO | 0 à 1 % |
| BaO | 0 à 1 % |
| CaO+MgO+BaO+SrO | 5 à 15% |
| Na₂O | 0 à 5 % |
| K₂O | 0 à 5 % |
| Na₂O+K₂O | 1 à 6%. |

Le ou chaque substrat de verre peut être fabriqué selon les techniques connues de l'homme du métier. Les matières premières, généralement pulvérulentes, naturelles ou issues de l'industrie chimique, sont mélangées puis introduites dans un four. Ce dernier peut être chauffé à l'aide de brûleurs (aériens, immergés dans le bain de verre et/ou situés en voûte et impactant les matières premières ou le bain de verre) ou encore à l'aide d'électrodes immergées dans le bain de verre, typiquement des électrodes en molybdène. Le four est généralement construit en briques réfractaires, par exemple en silice, en alumine, en mullite, en oxyde de chrome et/ou en solution solide alumine-zircone-silice. Les matières premières subissent sous l'effet de la chaleur des réactions diverses, conduisant à l'obtention d'un bain de verre fondu. Les températures du bain de verre sont typiquement comprises entre 1300 et 1700°C, notamment entre 1550 et 1650°C. Le verre fondu est ensuite acheminé vers des dispositifs de formage : par exemple formage par déversement sur un bain d'étain en fusion (procédé dit de flottage ou « float ») ou à l'aide de rouleaux lamineurs. La feuille de verre obtenue est généralement recuite de manière à éliminer les contraintes mécaniques qui ont pu naître en son sein lors du refroidissement.

Le dispositif électrochrome selon l'invention comprend de préférence, dans l'ordre à partir d'un premier substrat ou dans l'ordre inverse :
- une couche électroconductrice transparente,
- une contre-électrode, en mesure d'insérer de façon réversible des ions de même charge ceux que le matériau électrochrome peut insérer,
- une couche d'un électrolyte conducteur ionique,
- une couche d'un matériau électrochrome, en mesure d'insérer réversiblement et simultanément des ions, dont les états d'oxydation qui correspondent aux états insérés et désinsérés sont d'une coloration distincte lorsqu'ils sont soumis à une alimentation électrique appropriée; l'un de ces états présentant une transmission lumineuse plus élevée que l'autre,
- une deuxième couche électroconductrice transparente.

A titre d'alternative, l'ordre des couches entre les deux couches conductrices transparentes peut être inversé : matériau électrochrome puis électrolyte et enfin contre-électrode.

Le matériau électrochrome est à base d'oxyde de tungstène (matériau électrochrome cathodique) ou d'oxyde d'iridium (matériau électrochrome anodique). Ces matériaux peuvent insérer des cations, notamment des protons ou des ions lithium.

La contre-électrode est de préférence constituée d'une couche neutre en coloration ou, du moins, transparente ou peu colorée quand la couche électrochrome est à l'état coloré. La contre-électrode est de préférence à base d'un oxyde d'un élément choisi parmi le tungstène, le nickel, l'iridium, le chrome, le fer, le cobalt, le rhodium, ou à base d'un oxyde mixte d'au moins deux de ces éléments, notamment l'oxyde mixte de nickel et de tungstène. Si le matériau électrochrome est l'oxyde de tungstène, donc un matériau électrochrome cathodique, dont l'état coloré correspond à l'état le plus réduit, un matériau électrochrome anodique à base d'oxyde de nickel ou d'iridium peut être par exemple utilisé pour la contre-électrode. Il peut notamment s'agir d'une couche d'oxyde mixte de vanadium et de tungstène ou d'oxyde mixte de nickel et de tungstène. Si le matériau électrochrome est l'oxyde d'iridium, un matériau électrochrome cathodique, par exemple à base d'oxyde de tungstène, peut jouer le rôle de contre-électrode. On peut également utiliser un matériau optiquement neutre dans les états d'oxydation concernés, comme par exemple l'oxyde de cérium ou des matériaux organiques comme les polymères conducteurs électroniques (polyaniline) ou le bleu de Prusse.

Selon un premier mode de réalisation, l'électrolyte se présente sous la forme d'un polymère ou d'un gel, notamment un polymère à conduction protonique, par exemple tel que ceux décrits dans les brevets européens EP 0 253 713 et EP 0 670 346, ou un polymère à conduction d'ions lithium, par exemple tel que ceux décrits dans les brevets EP 0 382 623, EP 0 518 754 ou EP 0 532 408. On parle alors de systèmes électrochromes mixtes.

Selon un deuxième mode de réalisation, l'électrolyte est constitué d'une couche minérale formant un conducteur ionique qui est isolé électriquement. Ces systèmes électrochromes sont alors désignés comme étant « tout solide ». On peut notamment se référer aux brevets européens EP 0 867 752 et EP 0 831 360.

Le dispositif selon l'invention peut également être du type « tout polymère », dans lequel deux couches électroconductrices sont disposées de part et d'autre d'un empilement comprenant un polymère à coloration cathodique, un polymère isolant électronique conducteur ionique (de H⁺ ou Li⁺ tout particulièrement) et enfin un polymère à coloration anodique (tel que la polyaniline ou le polypyrrole) .

L'empilement électrochrome peut également comprendre diverses couches, notamment sous-couches, surcouches ou couches intermédiaires, destinées par exemple à faciliter le dépôt d'une couche subséquente, ou à protéger certaines couches contre les agressions mécaniques ou chimiques (résistance à la corrosion, à l'abrasion etc.). L'empilement électrochrome peut par exemple être surmonté d'une couche de protection à base de silice et/ou d'alumine.

Le dispositif selon l'invention peut être fabriqué de la manière suivante : on dépose successivement sur un substrat support, transparent ou non, une électrode électroconductrice inférieure, généralement une couche d'oxyde d'indium et d'étain (ITO) ou une couche d'oxyde d'étain dopé, par exemple au fluor, des couches fonctionnelles électrochromes, par exemple d'oxyde d'iridium (IrOx), d'oxyde de tungstène (WO₃), d'oxyde de tantale (Ta₂O₅), et une électrode électroconductrice supérieure.

Bien entendu les deux électrodes électroconductrices inférieure et supérieure doivent être réunies à des connecteurs d'amenée de courant respectifs. Cette connexion est habituellement obtenue au moyen de clinquants métalliques qui sont respectivement mis en contact avec l'électrode supérieure et avec l'électrode inférieure.

Le dispositif électrochrome comprend généralement un deuxième substrat (le premier substrat étant celui sur lequel est déposé l'empilement électrochrome). Plusieurs modes de réalisation sont possibles : les deux substrats peuvent être feuilletés, au sens où l'on place un polymère de feuilletage (notamment à base de polyvinylbutyral, d'un copolymère d'éthylène et d'acétate de vinyle - EVA- ou encore de polyuréthane) en contact entre le premier substrat revêtu de son empilement et le deuxième substrat. Les deux substrats peuvent alternativement être montés en double vitrage, au sens où le deuxième substrat est maintenu à distance du premier, en général au moyen d'un cadre périphérique, ménageant ainsi une lame de gaz entre les deux substrats. Le gaz est notamment de l'argon. Dans les deux cas, l'empilement électrochrome est disposé entre les deux substrats de manière à être protégé contre tout type d'agressions chimiques ou mécaniques.

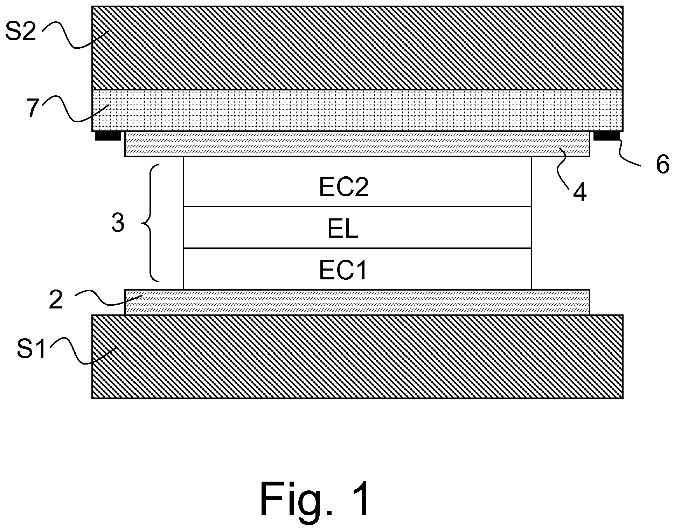

La figure 1 représente schématiquement un dispositif électrochrome selon l'invention.

En référence à la figure 1, le dispositif électrochrome selon l'invention est de préférence " tout solide " et comprend successivement :
- un premier substrat en verre S1 dont le coefficient de dilatation thermique linéaire est compris entre 35 et 60.10⁻⁷/°C,
- une couche électroconductrice inférieure 2, de préférence à base d'ITO, par exemple de 250 nm d'épaisseur, notamment déposée à chaud, dont la résistance carré est de l'ordre de 10 Ohms ; en variante il peut s'agir d'une couche d'oxyde d'étain dopé au fluor ou à l'antimoine, ou d'un multicouche comportant un empilement de couches du type ITO/ZnO :Al/Ag/ZnO :Al/ITO, notamment d'épaisseurs respectives 15 à 20 nm pour l'ITO/60 à 80 nm pour le ZnO :Al/3 à 15 nm pour l'argent/60 à 80 nm pour le ZnO :Al/15 à 20 nm pour l'ITO,
- un système électrochrome 3 dont la structure est notamment telle que décrite ci après,
- une couche électroconductrice supérieure 4, de préférence à base d'ITO, par exemple de 110 nm d'épaisseur, ou de SnO₂ :F, ou en variante une couche électroconductrice supérieure comportant d'autres éléments conducteurs : il peut s'agir plus particulièrement d'associer la couche électroconductrice à une couche plus conductrice qu'elle, et/ou à une pluralité de bandes ou de fils conducteurs. On se reportera pour plus de détails à la demande WO-00/57243 pour la mise en œuvre de telles couches électroconductrices multi-composantes. Un mode de réalisation préféré de ce type de couche électroconductrice consiste à appliquer sur la couche d'ITO (éventuellement surmontée d'une ou plusieurs autres couches conductrices) un réseau de fils conducteurs 6 déposés à la surface d'une feuille 7 de polymère, cette feuille 7 faisant office d'intercalaire de feuilletage et permettant d'assembler l'ensemble à un second substrat S2, et de relier l'empilement électrochrome à l'une des amenées de courant (non-représentées),
- un second substrat S2 en verre dont le coefficient de dilatation thermique linéaire peut également être compris entre 35 et 60.10⁻⁷/°C.

L'empilement électrochrome 3 comprend de préférence :
- en guise de contre-électrode, une couche de matériau électrochrome anodique EC1 en oxyde d'iridium (hydraté) de 40 à 100 nm d'épaisseur ou d'oxyde de nickel hydraté ou non de 40 à 400 nm d'épaisseur, alliée ou non à d'autres métaux,
- une couche à fonction électrolyte EL constituée d'une couche en oxyde de tungstène, typiquement de 100 nm d'épaisseur, puis d'une couche en un oxyde choisi parmi l'oxyde de tantale hydraté, l'oxyde de silicium hydraté, l'oxyde de zirconium hydraté, l'oxyde d'antimoine hydraté, ou l'un de leurs mélanges, typiquement de 250 nm d'épaisseur,
- une couche de matériau électrochrome cathodique EC2 à base d'oxyde de tungstène WO₃ ou d'oxyde mixte de vanadium et de tungstène, par exemple de 500 nm d'épaisseur.

Un autre empilement électrochrome préféré comprend dans l'ordre à partir d'un premier substrat :
- une couche de matériau électrochrome cathodique à base d'oxyde de tungstène WO₃, par exemple de 300 nm d'épaisseur,
- une couche à fonction électrolyte EL constituée d'une couche en oxyde de tungstène, typiquement de 180 nm d'épaisseur puis d'une couche en oxyde de silicium, typiquement de 50 nm d'épaisseur,
- une contre-électrode en oxyde mixte de nickel et de tungstène, par exemple de 250 nm d'épaisseur. Cet empilement est inséré entre deux électrodes transparentes, typiquement à base d'ITO et/ou d'oxyde d'étain dopé. Dans un tel empilement, le cation susceptible d'être inséré ou désinséré est de préférence le lithium.

L'ensemble des couches est de préférence déposé par pulvérisation cathodique assistée par champ magnétique. En variante, il pourrait être obtenu par évaporation thermique ou assistée par un flux d'électrons, par ablation laser, par CVD, éventuellement assistée par plasma ou par microondes, ou par une technique à pression atmosphérique, notamment par dépôt de couches par synthèse sol-gel, notamment de type trempé, spray-coating ou enduction laminaire.

L'empilement actif 3 peut être incisé sur tout ou partie de sa périphérie au moyen de gorges réalisées par des moyens mécaniques ou par attaque par rayonnement laser, éventuellement pulsé, et ce afin de limiter les fuites électriques périphériques comme cela est décrit dans la demande française FR-2 781 084.

Par ailleurs, le dispositif incorpore de préférence un premier joint périphérique en contact avec les faces 2 et 3 (2 et 3 étant d'une manière conventionnelle la numérotation des faces internes des substrats S1 et S2), ce premier joint étant adapté pour réaliser une barrière aux agressions chimiques extérieures.

Un deuxième joint périphérique (non représenté sur la figure) est en contact avec le chant de S1, de S2, et les faces 1 et 4 (1 et 4 étant d'une manière conventionnelle la numérotation des faces externes des substrats S1 et S2), de manière à réaliser un moyen de montage avec le moyen de transport, une étanchéité entre l'intérieur et l'extérieur, une fonction esthétique, un moyen d'incorporation d'éléments de renfort.

Ces dispositifs ou vitrages électrochromes peuvent trouver des applications dans le domaine du contrôle de l'apport solaire à travers des vitrages montés en extérieur dans des bâtiments ou des véhicules du type automobile, train ou avion (hublot par exemple). Le but est de pouvoir limiter un échauffement excessif à l'intérieur des habitacles/locaux, mais uniquement en cas de fort ensoleillement.

Il peut aussi s'agir du contrôle du degré de vision à travers des vitrages, notamment afin de les obscurcir, voire d'empêcher toute vision quand cela est souhaitable. Cela peut concerner les vitrages montés en cloisons intérieures dans les locaux, les trains, les avions ou montés en vitres latérales d'automobile. Cela concerne aussi les miroirs utilisés comme rétroviseurs, pour éviter ponctuellement au conducteur d'être ébloui, ou les panneaux de signalisation, pour que des messages apparaissent quand cela est nécessaire, ou par intermittence pour mieux attirer l'attention.

L'invention a donc également pour objet un vitrage pour bâtiment ou véhicule de transport, une cloison, un rétroviseur ou un panneau de signalisation incorporant un dispositif selon l'invention.

Les exemples 3, 4, 10-13 qui suivent illustrent l'invention sans toutefois la limiter.

Les tableaux 1 et 2 ci-après donnent quelques exemples de composition de verre pouvant être utilisés pour des substrats incorporés aux dispositifs électrochromes selon l'invention.

Chacun de ces tableaux indique la teneur pondérale en oxyde (exprimée en %) et le coefficient de dilatation thermique, noté « CTE » et exprimé en 10⁻⁷/°C. Le coefficient de dilatation thermique linéaire est typiquement mesuré selon la norme NF-B30-103.

**Tableau 1**

| | 1 | 2 | 3 | 4 | 5 | 6 | 7 |
|---|---|---|---|---|---|---|---|
| SiO₂ (%) | 68,2 | 63,3 | 64,8 | 70,5 | 57 | 60 | 60,5 |
| B₂O₃ (%) | - | - | 10 | 5, 8 | 4 | 5 | - |
| Al₂O₃ (%) | 9,3 | 11,2 | 14 | 10 | 16 | 18 | 14,6 |
| MgO (%) | 5 | 8 | 1,8 | 2,4 | 7 | 8 | 0,05 |
| CaO (%) | 17,5 | 17,5 | 2,5 | 3,1 | 10 | 8 | 11,5 |
| SrO (%) | - | - | - | - | - | - | 0,2 |
| BaO (%) | - | - | 2,7 | 3 | 6 | - | 13 |
| Na₂O (%) | - | - | 4 | 5 | - | 1 | - |
| | | | | | | | |
| CTE (10⁻⁷/°C) | 46 | 47 | 42 | 46 | 46 | 42 | 50 |

**Tableau 2**

| | 8 | 9 | 10 | 11 | 12 | 13 | 14 |
|---|---|---|---|---|---|---|---|
| SiO₂ (%) | 59,4 | 51,9 | 72 | 65 | 74,9 | 70 | 64,9 |
| B₂O₃ (%) | 4,5 | 8 | 12 | 3 | 17 | 18 | 9,1 |
| Al₂O₃ (%) | 16,5 | 20,5 | 6 | 13,6 | 1,7 | 2,5 | 16,5 |
| MgO (%) | 8,2 | 8,9 | 0,4 | 0,5 | 0,4 | 0,5 | 1,6 |
| CaO (%) | 11,4 | 9,4 | 1,2 | 7,9 | 0,6 | 1 | 5,5 |
| SrO (%) | - | - | - | 3 | - | - | 1,8 |
| BaO (%) | - | - | 4,3 | 5,1 | - | - | - |
| Li₂O (%) | - | - | - | - | - | 0,5 | - |
| Na₂O (%) | - | 1,3 | 2,8 | 1,1 | 3,8 | 0,5 | - |
| K₂O (%) | - | - | 0,9 | 0,9 | 1,5 | 6,5 | 0,6 |
| | | | | | | | |
| CTE (10⁻⁷/°C) | 45 | 41 | 38 | 48 | 38 | 43 | 36 |

Des substrats de verre présentant ces compositions sont obtenus par flottage, puis incorporés dans le dispositif électrochrome de la figure 1 en tant que premier substrat, sur lequel est déposé l'empilement électrochrome.

Les vitrages obtenus présentent un comportement thermomécanique aussi bon voire meilleur que des vitrages électrochromes fabriqués à partir de substrats de verre silico-sodo-calcique trempé ou durci. En revanche, l'absence de contraintes en leur sein permet leur découpe. Ainsi, il est possible de déposer les couches constituant l'empilement électrochrome sur des substrats de grande taille puis de découper les substrats revêtus à la taille voulue.

## Revendications

1. Dispositif électrochrome comprenant un premier substrat en verre non trempé (S1) dont le coefficient de dilatation thermique linéaire est compris entre 35 et 60.10⁻⁷/°C, ledit substrat (S1) étant revêtu d'un empilement comprenant au moins une couche électroconductrice transparente (2, 4), une couche d'un matériau électrochrome (EC2), une couche d'un électrolyte conducteur ionique (EL) et une contre-électrode (EC1), dans lequel le substrat en verre (S1) présente une composition chimique comprenant les constituants suivants, dans les limites pondérales ci-après définies :
| | |
|---|---|
| SiO₂ | 50 à 82% |
| B₂O₃ | 0 à 20% |
| Al₂O₃ | 1 à 15% |
| MgO | 0 à 10% |
| CaO | 0 à 15% |
| SrO | 0 à 5% |
| BaO | 0 à 15% |
| CaO+MgO+BaO+SrO | 0 à 15% |
| Na₂O | 0 à 6% |
| K₂O | 0 à 8 % |
| Na₂O+K₂O | 0 à 8%, |
et dans lequel le matériau électrochrome (EC2) est à base d'oxyde de tungstène ou d'oxyde d'iridium.

2. Dispositif selon l'une des revendications précédentes, dans lequel le substrat en verre (S1) possède un coefficient de dilatation thermique linéaire inférieur ou égal à 50.10^{- 7}/°C, voire inférieur ou égal à 45.10⁻⁷/°C.

3. Dispositif selon l'une des revendications précédentes, dans lequel le substrat en verre (S1) présente une composition chimique comprenant les constituants suivants, dans les limites pondérales ci-après définies :
| | |
|---|---|
| SiO₂ | 50 à 60% |
| B₂O₃ | 10 à 15% |
| Al₂O₃ | 10 à 15% |
| MgO | 2 à 5% |
| CaO | 2 à 5% |
| SrO | 0 à 1% |
| BaO | 0 à 1% |
| CaO+MgO+BaO+SrO | 5 à 15% |
| Na₂O | 0 à 5% |
| K₂O | 0 à 5% |
| Na₂O+K₂O | 1 à 6%. |

4. Dispositif selon l'une des revendications précédentes, comprenant dans l'ordre à partir d'un premier substrat (S1) ou dans l'ordre inverse :
- une couche électroconductrice transparente (2),
- une contre-électrode (EC1),
- une couche d'un électrolyte conducteur ionique (EL),
- une couche d'un matériau électrochrome (EC2),
- une deuxième couche électroconductrice transparente (4).

5. Dispositif selon l'une des revendications précédentes, tel que la contre-électrode (EL) est à base d'un oxyde d'un élément choisi parmi le tungstène, le nickel, l'iridium, le chrome, le fer, le cobalt, le rhodium, ou à base d'un oxyde mixte d'au moins deux de ces éléments, notamment l'oxyde mixte de nickel et de tungstène.

6. Dispositif selon l'une des revendications précédentes, tel que l'électrolyte (EL) est constitué d'une couche minérale formant un conducteur ionique qui est isolé électriquement.

7. Dispositif selon l'une des revendications précédentes, comprenant un deuxième substrat (S2), les deux substrats (S1, S2) étant feuilletés ou montés en double vitrage.

8. Vitrage pour bâtiment ou véhicule de transport, cloison, rétroviseur ou panneau de signalisation incorporant un dispositif selon l'une des revendications précédentes.

## Patentansprüche

1. Elektrochrome Vorrichtung, umfassend ein erstes Substrat aus nicht gehärtetem Glas (S1), dessen linearer Wärmeausdehnungskoeffizient zwischen 35 und 60.10⁻⁷/°C liegt, wobei das Substrat (S1) mit einem Stapel beschichtet ist, der mindestens eine transparente, elektrisch leitende Schicht (2, 4), eine Schicht aus einem elektrochromen Material (EC2), eine Schicht aus einem ionenleitenden Elektrolyten (EL) und eine Gegenelektrode (EC1) umfasst, wobei das Glassubstrat (S1) eine chemische Zusammensetzung aufweist, umfassend die folgenden Bestandteile innerhalb der nachstehend definierten Gewichtsgrenzen:
| | |
|---|---|
| SiO₂ | 50 - 82 % |
| B₂O₃ | 0 - 20 % |
| Al₂O₃ | 1 - 15 % |
| MgO | 0 - 10 % |
| CaO | 0 - 15 % |
| SrO | 0 - 5 % |
| BaO | 0 - 15 % |
| CaO+MgO+BaO+SrO | 0 - 15 % |
| Na₂O | 0 - 6 % |
| K₂O | 0 - 8 % |
| Na₂O+K₂O | 0 - 8 % |
und wobei das elektrochrome Material (EC2) auf Wolframoxid oder Iridiumoxid basiert.

2. Vorrichtung nach einem der vorhergehenden Ansprüche, wobei das Glassubstrat (S1) einen linearen Wärmeausdehnungskoeffizienten von kleiner oder gleich 50.10⁻⁷/°C oder sogar kleiner oder gleich 45.10⁻⁷/°C besitzt.

3. Vorrichtung nach einem der vorhergehenden Ansprüche, wobei das Glassubstrat (S1) eine chemische Zusammensetzung aufweist, die die folgenden Bestandteile innerhalb der nachstehend definierten Gewichtsgrenzen umfasst:
| | |
|---|---|
| SiO₂ | 50 - 60 % |
| B₂O₃ | 10 - 15 % |
| Al₂O₃ | 10 - 15 % |
| MgO | 2 - 5 % |
| CaO | 2 - 5 % |
| SrO | 0 - 1 % |
| BaO | 0 - 1 % |
| CaO+MgO+BaO+SrO | 5 - 15 % |
| Na₂O | 0 - 5 % |
| K₂O | 0 - 5 % |
| Na₂O+K₂O | 1 - 6 % |

4. Vorrichtung nach einem der vorhergehenden Ansprüche, umfassend in Reihenfolge ab einem ersten Substrat (S1) oder in umgekehrter Reihenfolge:
- eine transparente elektrisch leitende Schicht (2),
- eine Gegenelektrode (EC1),
- eine Schicht aus einem ionenleitenden Elektrolyten (EL),
- eine Schicht aus einem elektrochromen Material (EC2),
- eine zweite transparente elektrisch leitende Schicht (4).

5. Vorrichtung nach einem der vorhergehenden Ansprüche derart, dass die Gegenelektrode (EL) auf einem Oxid eines Elements basiert, das aus Wolfram, Nickel, Iridium, Chrom, Eisen, Kobalt, Rhodium ausgewählt ist oder auf einem Mischoxid von mindestens zwei dieser Elemente basiert, insbesondere dem Mischoxid von Nickel und Wolfram.

6. Vorrichtung nach einem der vorhergehenden Ansprüche derart, dass der Elektrolyt (EL) aus einer mineralischen Schicht besteht, die einen lonenleiter bildet, der elektrisch isoliert ist.

7. Vorrichtung nach einem der vorhergehenden Ansprüche, umfassend ein zweites Substrat (S2), wobei die beiden Substrate (S1, S2) verbunden oder als Doppelverglasung montiert sind.

8. Verglasung für Gebäude oder Transportfahrzeug, Trennwand, Rückspiegel oder Hinweisschild, die eine Vorrichtung nach einem der vorhergehenden Ansprüche integriert.

## Claims

1. An electrochromic device comprising a first substrate made of untempered glass (S1), the linear thermal expansion coefficient of which is between 35 and 60 × 10⁻⁷/°C, said substrate (S1) being coated with a stack comprising at least one transparent electrically conductive layer (2, 4), one layer of an electrochromic material (EC2), one layer of an ionically conductive electrolyte (EL) and one counterelectrode (EC1), in which the glass substrate (S1) has a chemical composition comprising the following constituents, within the weight limits defined below:
| | |
|---|---|
| SiO₂ | 50 to 82% |
| B₂O₃ | 0 to 20% |
| Al₂O₃ | 0 to 22% |
| MgO | 0 to 10% |
| CaO | 0 to 15% |
| SrO | 0 to 5% |
| BaO | 0 to 15% |
| CaO+MgO+BaO+SrO | 0 to 15% |
| Na₂O | 0 to 6% |
| K₂O | 0 to 8% |
| Na₂O+K₂O | 0 to 8%, |
And in which the electrochromic material (EC2) is based on tungsten oxide or iridium oxide.

2. The device as claimed in one of the preceding claims, in which the glass substrate (S1) has a linear thermal expansion coefficient of less than or equal to 50 × 10⁻⁷/°C, or even less than or equal to 45 × 10⁻⁷/°C.

3. The device as claimed in one of the preceding claims, in which the glass substrate (S1) has a chemical composition comprising the following constituents, within the weight limits defined below:
| | |
|---|---|
| SiO₂ | 50 to 60% |
| B₂O₃ | 10 to 15% |
| Al₂O₃ | 10 to 15% |
| MgO | 2 to 5% |
| CaO | 2 to 5% |
| SrO | 0 to 1% |
| BaO | 0 to 1% |
| CaO+MgO+BaO+SrO | 5 to 15% |
| Na₂O | 0 to 5% |
| K₂O | 0 to 5% |
| Na₂O+K₂O | 1 to 6%. |

4. The device as claimed in one of the preceding claims, comprising in order starting from a first substrate (S1) or in reverse order:
- a transparent electrically conductive layer 2),
- a counterelectrode (EC1).
- a layer of an ionically conductive electrolyte (EL),
- a layer of an electrochromic material (EC2),
- a second transparent electrically conductive layer (4).

5. The device as claimed in one of the preceding claims, such that the counterelectrode (EL) is based on an oxide of an element chosen from tungsten, nickel, iridium, chromium, iron, cobalt, rhodium, or based on a mixed oxide of at least two of these elements, in particular the mixed oxide of nickel and tungsten.

6. The device as claimed in one of the preceding claims, such that the electrolyte (EL) is constituted of a mineral layer that forms an ionic conductor which is electrically isolated.

7. The device as claimed in one of the preceding claims, comprising a second substrate (S2), both substrates (S1, S2) being laminated or mounted as double glazing.

8. A glazing unit for a building or transport vehicle, partition, rear-view mirror or indicating panel incorporating a device as claimed in one of the preceding claims.
